# EUROPEAN PATENT APPLICATION

(11) **EP 4 397 732 A1**
(43) Date of publication of application: **10.07.2024**
(21) Application number: 22864275.7
(22) Date of filing: 18.08.2022
(51) Int. Cl.: C09J 175/04, B32B 7/12, B32B 27/40, B65D 65/40, C09J 5/04, C09J 11/06, C09J 175/06, C09J 175/08

(54) **ADHESIVE, LAMINATE, METHOD FOR MANUFACTURING LAMINATE, AND PACKAGING MATERIAL**

(30) Priority: 31.08.2021 JP 2021140994
(71) Applicant: DIC Corporation, Tokyo 174-8520 (JP)
(72) Inventor: HONMA Takao, Tokyo 174-8520 (JP); TOMITA Daiki, Tokyo 174-8520 (JP); AKITA Kouji, Tokyo 174-8520 (JP); ARAI Masamitsu, Tokyo 174-8520 (JP)
(74) Representative: Kraus & Lederer PartGmbB
(86) International application number: PCT/JP2022/031160
(87) International publication number: WO 2023/032690

(57) **Abstract**

Provided are a two-component curable adhesive having excellent adhesion to metal foils or metal deposition layers, a laminate obtained using the adhesive, and a packaging material. An adhesive contains a polyisocyanate composition (X) and a polyol composition (Y). The polyisocyanate composition (X) contains a polyisocyanate compound (A). The polyol composition (Y) contains a polyol (B) and a compound (C) that is at least one selected from the group consisting of dimethylolpropionic acid and dimethylolbutanoic acid.

## Description

### Technical Field

The present invention relates to an adhesive, a laminate obtained using the adhesive, a method for producing a laminate, and a packaging material.

### Background Art

Laminates for use in various packaging materials, labels, and the like are provided with visual quality, functionality, preservability, convenience, transportation resistance, and the like by lamination of a wide variety of base materials such as plastic films, metal foils, and paper. Packaging materials made by forming the laminate into a bag shape are used as packaging materials for food, pharmaceuticals, detergents, and the like.

Conventionally, laminates for use in packaging materials have been mainly obtained by a dry lamination system, in which an adhesive dissolved in a volatile organic solvent (may be referred to as a solvent-type laminate adhesive) is applied to a base material, the organic solvent is volatilized in a step of passing through an oven, and another base material is bonded thereto. However, in recent years, from the viewpoint of reducing environmental load and improving the work environment, demand for reactive two-component laminate adhesives that do not contain any volatile organic solvent (hereinafter, referred to as a solventless adhesive) has been increasing (PTL 1).

### Citation List

### Patent Literature

PTL 1: Japanese Unexamined Patent Application Publication No. 2014-159548

### Summary of Invention

### Technical Problem

The solventless adhesive has many advantages including having no drying step and no solvent discharge, saving energy and involving low running cost, and having no concern about solvents remaining in laminates after bonding plastic films together or laminates after bonding together plastic films and metal foils or metal deposition layers. Meanwhile, components for use in the solventless adhesive must be designed to have a low molecular weight so as to achieve viscosity enabling application when heated to about 40°C to 100°C, making adhesion to metal foils and metal deposition layers insufficient.

The present invention has been made in view of these circumstances, and an object thereof is to provide a two-component curable adhesive having excellent adhesion to metal foils and metal deposition layers even with a low molecular weight, a laminate obtained using the adhesive, and a packaging material.

### Solution to Problem

The present invention relates to a two-component curable adhesive containing a polyisocyanate composition (X) and a polyol composition (Y), the polyisocyanate composition (X) containing a polyisocyanate compound (A), and the polyol composition (Y) containing a polyol (B) and a compound (C) that is at least one selected from the group consisting of dimethylolpropionic acid and dimethylolbutanoic acid.

### Advantageous Effects of Invention

The present invention can provide a two-component curable adhesive having excellent adhesion to metal foils and metal deposition layers even with a low molecular weight.

### Description of Embodiments

### «Adhesive»

The adhesive of the present invention is a two-component curable one containing a polyisocyanate composition (X) and a polyol composition (Y). The following describes the adhesive of the present invention in detail.

### <Polyisocyanate Composition (X)>

### (Polyisocyanate Compound (A))

The polyisocyanate composition (X) contains a polyisocyanate compound (A) having a plurality of isocyanate groups. The polyisocyanate compound (A) is not limited to a particular compound, and examples thereof include aromatic diisocyanates, aromatic aliphatic diisocyanates, aliphatic diisocyanates, and alicyclic diisocyanates; biuret forms, nurate forms, adduct forms, allophanate forms, carbodiimide-modified forms, and uretdione-modified forms of theses diisocyanates; and urethane prepolymers obtained by reacting these polyisocyanates and polyols, which can be used individually or in combination.

Examples of the aromatic diisocyanates include 2,2'-diphenylmethane diisocyanate, 2,4'-diphenylmethane diisocyanate, 4,4'-diphenylmethane diisocyanate, polymethylene polyphenyl polyisocyanate (also called polymeric MDI or crude MDI), 1,3-phenylene diisocyanate, 4,4'-diphenyl diisocyanate, 1,4-phenylene diisocyanate, 2,4-tolylene diisocyanate, 2,6-tolylene diisocyanate, 4,4'-toluidine diisocyanate, 2,4,6-triisocyanate toluene, 1,3,5-triisocyanate benzene, dianisidine diisocyanate, 4,4'-diphenyl ether diisocyanate, and 4,4',4"-triphenylmethane triisocyanate, but these are not limiting.

The aromatic aliphatic diisocyanate means an aliphatic isocyanate having one or more aromatic rings in the molecule, and examples thereof include m- and p-xylylene diisocyanate (also known as XDI), and α,α,α',α'-tetramethylxylylene diisocyanate (also known as TMXDI), but these are not limiting.

Examples of the aliphatic diisocyanates include trimethylene diisocyanate, tetramethylene diisocyanate, hexamethylene diisocyanate (also known as HDI), pentamethylene diisocyanate, 1,2-propylene diisocyanate, 2,3-butylene diisocyanate, 1,3-butylene diisocyanate, dodecamethylene diisocyanate, and 2,4,4-trimethylhexamethylene diisocyanate, but these are not limiting.

Examples of the alicyclic diisocyanates include 3-isocyanatomethyl-3,5,5-trimethylcyclohexyl isocyanate, isophorone diisocyanate (also known as IPDI), 1,3-cyclopentane diisocyanate, 1,3-cyclohexane diisocyanate, 1,4-cyclohexane diisocyanate, methyl-2,4-cyclohexane diisocyanate, methyl-2,6-cyclohexane diisocyanate, 4,4'-methylenebis(cyclohexyl isocyanate), and 1,4-bis(isocyanatomethyl)cyclohexane, but these are not limiting.

Examples of the polyol used in the synthesis of the urethane prepolymers include alkylene glycols such as ethylene glycol, propylene glycol, 1,3-propanediol, 1,4-butanediol, 1,5-pentanediol, 3-methyl-1,5-pentanediol, 1,6-hexanediol, neopentyl glycol, methyl pentanediol, dimethyl butanediol, butyl ethyl propanediol, 1,4-cyclohexanediol, and 1,4-cyclohexanedimethanol;
bisphenols such as bisphenol A, bisphenol F, hydrogenated bisphenol A, and hydrogenated bisphenol F;
dimer diols;
bishydroxyethoxybenzene;
polyalkylene glycols such as diethylene glycol, triethylene glycol, other polyethylene glycols, polypropylene glycol, and polybutylene glycol;
urethane bond-containing polyether polyols in which polyalkylene glycols are further increased in molecular weight with aromatic or aliphatic polyisocyanates;
polyester polyols obtained by reacting the alkylene glycols or polyalkylene glycols described above and at least one of C₂₋₁₃ aliphatic dicarboxylic acids such as oxalic acid, malonic acid, succinic acid, glutaric acid, adipic acid, fumaric acid, maleic acid, suberic acid, azelaic acid, sebacic acid, undecanedioic acid, dodecanedioic acid, and tridecanedioic acid and aromatic polyvalent carboxylic acids such as orthophthalic acid, isophthalic acid, terephthalic acid, trimellitic acid, and pyromellitic acid; and
polyester polyols as reaction products of polyesters obtained by a ring-opening polymerization reaction of cyclic ester compounds such as propiolactone, butyrolactone, ε-caprolactone, σ-valerolactone, and β-methyl-σ-valerolactone and polyhydric alcohols such as glycols, glycerin, trimethylolpropane, and pentaerythritol.

Because of being the adhesive having excellent applicability even when heated at a relatively low temperature of about 40°C, the polyisocyanate compound (A) preferably contains a urethane prepolymer (A1) as a rection product of a polyisocyanate (a1-1) containing at least 4,4'-diphenylmethane diisocyanate and a polyol (a 1 -2).

### (Urethane Prepolymer (A1))

The polyisocyanate (a1-1) contains 4,4'-diphenylmethane diisocyanate and may contain other polyisocyanate compounds. The polyisocyanate compounds that can be used in combination with 4,4'-diphenylmethane diisocyanate are not limited to particular compounds, and one or two or more of those exemplified as the polyisocyanate compound (A) can be used in combination. The blending ratio of 4,4'-diphenylmethane diisocyanate in the polyisocyanate (a1-1) is preferably 40 to 99% by mass and more preferably 75 to 90% by mass.

As the polyol (a1-2), the same ones as those exemplified in the description of the polyisocyanate compounds (A) can be used. At least one of polyalkylene glycols and polyester polyols is preferably used. The number average molecular weight of the polyalkylene glycols and the polyester polyols is preferably 200 to 6,000. In the invention of the present application, a weight average molecular weight (Mw) and the number average molecular weight (Mn) are values measured by gel permeation chromatography (GPC) under the following conditions.
Measurement apparatus: HLC-8320GPC manufactured by Tosoh Corporation
Column: TSKgel 4000HXL, TSKgel 3000HXL, TSKgel 2000HXL, and TSKgel 1000HXL manufactured by Tosoh Corporation
Detector: RI (a differential refractometer)
Data processing: Multi Station GPC-8020 model II manufactured by Tosoh Corporation
Measurement conditions: Column temperature of 40°C
   Solvent: Tetrahydrofuran
   Flow rate: 0.35 ml/minute
Standard: Monodispersed polystyrene
Sample: A 0.2%-by-mass tetrahydrofuran solution in terms of resin solid content filtered through a microfilter (100 µl)

The urethane prepolymer (A1) is preferably obtained by reacting isocyanate groups of the polyisocyanate (a1-1) and hydroxy groups of the polyol (a1-2) in a range where the equivalent ratio [NCO]/[OH] is 1.5 to 5.0. The urethane prepolymer (A1) preferably has an isocyanate content by the titration method (using di-n-butylamine) of 5 to 20% by mass. This allows the adhesive to have excellent application suitability.

### (Another Isocyanate Compound (A2))

The polyisocyanate composition (X) may contain an isocyanate compound (A2) other than the urethane prepolymer (A1). As the isocyanate compound (A2), those exemplified as the polyisocyanate compound (A) can be used as appropriate. Preferred are carbodiimide-modified diisocyanates and polymethylene polyphenyl polyisocyanate (also referred to as polymeric MDI or crude MDI).

When the polyisocyanate composition (X) contains the isocyanate compound (A2), its blending ratio, that is, the mass ratio to the urethane prepolymer (A1), that is, the urethane prepolymer (A1)/the isocyanate compound (A2) is preferably 50/50 to 99/1 and more preferably 70/30 to 97/3.

### <Polyol Composition (Y)>

### (Polyol (B))

The polyol (B) used in the present invention is not limited to a particular polyol, and examples thereof include glycols such as ethylene glycol, propylene glycol, 1,3-propanediol, 1,4-butanediol, 1,5-pentanediol, 3-methyl-1,5-pentanediol, 1,6-hexanediol, neopentyl glycol, methyl pentanediol, dimethyl butanediol, butyl ethyl propanediol, diethylene glycol, triethylene glycol, tetraethylene glycol, dipropylene glycol, tripropylene glycol, bishydroxyethoxybenzene, 1,4-cyclohexanediol, 1,4-cyclohexanedimethanol, and triethylene glycol;
trifunctional or tetrafunctional aliphatic alcohols such as glycerin, trimethylolpropane, pentaerythritol, and a triol form of polypropylene glycol;
bisphenols such as bisphenol A, bisphenol F, hydrogenated bisphenol A, and hydrogenated bisphenol F;
dimer diols;
polyether polyols obtained by addition polymerizing alkylene oxides such as ethylene oxide, propylene oxide, butylene oxide, styrene oxide, epichlorohydrin, tetrahydrofuran, and cyclohexylene in the presence of polymerization initiators such as the glycols and the trifunctional or tetrafunctional aliphatic alcohols;
a polyester polyol (1) as reaction products of polyesters obtained by a ring-opening polymerization reaction of cyclic ester compounds such as propiolactone, butyrolactone, ε-caprolactone, σ-valerolactone, and β-methyl-σ-valerolactone and polyhydric alcohols such as the glycols, glycerin, trimethylolpropane, and pentaerythritol;
a polyester polyol (2) obtained by reacting bifunctional polyols such as the glycols, the dimer diols, or the bisphenols with polyvalent carboxylic acids;
a polyester polyol (3) obtained by reacting the trifunctional or tetrafunctional aliphatic alcohols with polyvalent carboxylic acids;
a polyester polyol (4) obtained by reacting bifunctional polyols such as the glycols, the dimer diols, or the bisphenols and the trifunctional or tetrafunctional aliphatic alcohols with polyvalent carboxylic acids;
a polyester polyol (5) as polymers of hydroxy acids such as dimethylolpropionic acid and castor oil fatty acids;
a polyether polyester polyol obtained by reacting the polyether polyols with polyvalent carboxylic acids;
polyether polyester polyols obtained by reacting the polyether polyols and at least one selected from the group consisting of bifunctional polyols such as the glycols, the dimer diols, or the bisphenols and trifunctional or tetrafunctional aliphatic alcohols with polyvalent carboxylic acids;
vegetable oil polyols such as castor oil, dehydrated castor oil, hardened castor oil as a hydrogenated product of castor oil, and 5 to 50 mol alkylene oxide adducts of castor oil; and
polyurethane polyols, polyether polyurethane polyols, polyester polyurethane polyols, and polyether polyester polyols as reaction products of at least one of the polyols described above and polyisocyanate compounds, which can be used individually or in combination.

Examples of the polyvalent carboxylic acids include aliphatic dicarboxylic acids such as succinic acid, adipic acid, azelaic acid, sebacic acid, dodecanedicarboxylic acid, maleic anhydride, fumaric acid, 1,3-cyclopentanedicarboxylic acid, and 1,4-cyclohexanedicarboxylic acid; aromatic dicarboxylic acids such as orthophthalic acid, isophthalic acid, terephthalic acid, 1,4-naphthalenedicarboxylic acid, 2,5-naphthalenedicarboxylic acid, 2,6-naphthalenedicarboxylic acid, naphthalic acid, biphenyldicarboxylic acid, and 1,2-bis(phenoxy)ethane-p,p'-dicarboxylic acid; anhydrides or ester-forming derivatives of these aliphatic or dicarboxylic acids; p-hydroxybenzoic acid, p-(2-hydroxyethoxy)benzoic acid, and ester-forming derivatives of their dihydroxycarboxylic acids; and polybasic acids such as dimeric acid.

As the polyisocyanate compound, the same ones as those exemplified as the polyisocyanate compound (A) can be used.

### (Polyether Polyol (B1) and Vegetable Oil Polyol (B2))

Because of being the adhesive having excellent applicability even when heated at a relatively low temperature of about 40°C, the polyol (B) preferably contains at least either a polyether polyol (B1) or a vegetable oil polyol (B2). From the viewpoint of application suitability, the blending amount of the polyether polyol (B1) or the vegetable oil polyol (B2) in the polyol (B) is preferably 20% by mass or more and more preferably 30% by mass. The blending amount may be 100% by mass but more preferably 80% by mass or less.

From the viewpoint of laminate strength, the polyol (B) preferably contains a polyether diol (B1-1) with a number average molecular weight of 130 or more and 3,000 or less. Using the polyether diol (B1-1) allows the adhesive layer to have moderate flexibility and good laminate strength. When the polyol (B) contains the polyether polyol (B1-1), the blending amount thereof in the polyol (B) is preferably 10% by mass or more and 50% by mass or less.

From the viewpoint of heat seal strength, a tri- or more functional polyether polyol (B1-2) is preferably contained. This introduces a cross-linked structure into a cured coating film of the adhesive, which improves heat seal strength. The number-average molecular weight of the polyether polyol (B1-2) can be adjusted as appropriate and is 450 or more and 1,000 or less as an example. When the polyol (B) contains the polyether polyol (B1-2), the blending amount thereof in the polyol (B) is preferably 10% by mass or more and 30% by mass or less.

### (Polyester Polyol (B3))

In the present invention, the polyol (B) preferably contains a polyester polyol (B3). This can improve adhesion to hard films such as nylon films.

As the polyester polyol (B3), those exemplified above can be used as appropriate, and a reaction product of a composition containing an aliphatic polyol and an aliphatic polyvalent carboxylic acid is preferably used because of being the adhesive having excellent applicability even when heated at a relatively low temperature of about 40°C and having excellent compatibility with the polyether polyol (B1) and the vegetable oil polyol (B2). Out of the polyol used in the synthesis of the polyester polyol (B3), the blending amount of the aliphatic polyol is preferably 80% by mass or more, preferably 90% by mass or more, and preferably 95% by mass or more. The entire amount thereof may be the aliphatic polyol. Out of the polyvalent carboxylic acid used in the synthesis of the polyester polyol (B3), the blending amount of the aliphatic polyvalent carboxylic acid is preferably 80% by mass or more, preferably 90% by mass or more, and preferably 95% by mass or more. The entire amount of the polycarboxylic acid may be the aliphatic polycarboxylic acid.

From the viewpoint of the balance between adhesion to hard films and seal strength, the blending amount of the polyester polyol (B3) in the polyol (B) is preferably 5% by mass or more and 50% by mass or less and more preferably 20% by mass or more and 30% by mass or less.

### (Compound (C))

A compound (C) used in the present invention is at least one selected from the group consisting of 2,2-dimethylolacetic acid, 2,2-dimethylolpropionic acid, 2,2-dimethylolbutanoic acid, and 2,2-dimethylolpentanoic acid, preferably contains at least one of 2,2-dimethylolpropionic acid and 2,2-dimethylolbutanoic acid, and more preferably contains 2,2-dimethylolpropionic acid. By the polyol composition (Y) containing the compound (C), the adhesive has excellent adhesion to metal base materials and pot life.

From the viewpoint of adhesion to metal foils and metal deposition layers, the blending amount of the compound (C) in the polyol composition (Y) is preferably 0.1% by mass or more and more preferably 0.5% by mass or more. When the flexibility of the adhesive layer decreases, surface delamination near the interface with the base material is likely to occur and adhesion when applied to soft base materials tends to decease, and thus the blending amount of the compound (C) in the polyol composition (Y) is preferably 10% by mass or less and more preferably 2.5% by mass or less.

### (Polyamine (D))

The polyol composition (Y) preferably contains a polyamine (D) having a plurality of amino groups. In the present specification, the amino group refers to an NH₂ group or an NHR group (R is an alkyl group or an aryl group that may have a functional group). By the polyol composition containing the poly amine (D), a laminate having good appearance can be obtained even when a base material with barrier properties is bonded.

Fine air bubbles entrapped in the adhesive during application to the base material do not cause faulty appearance because they are not visible to the human eye if they remain as they are, but they gradually flocculate during an aging step and become a visible size, causing faulty appearance. In addition, when air bubbles of a visible size are present in the adhesive layer, the contact area between the base material and the adhesive layer will be reduced by the amount of the air bubbles, and the adhesive strength may decrease. It is considered that by the polyol composition (Y) containing the polyamine (D), the reaction of the polyisocyanate composition (X) and the polyol composition (Y) proceeds quickly to prevent the flocculation of air bubbles, and thus a reduction in laminate strength and the occurrence of faulty appearance by air bubbles in the laminate can be prevented.

As the polyamine (D), known ones can be used without particular limitations, and examples thereof include methylenediamine, ethylenediamine, isophoronediamine, 3,9-dipropanamine-2,4,8,10-tetraoxaspiroundecane, lysine, phenylenediamine, 2,2,4-trimethylhexamethylenediamine, tolylenediamine, hydrazine, piperazine, hexamethylenediamine, propylenediamine, dicyclohexylmethane-4,4-diamine, 2-hydroxyethylethylenediamine, di-2-hydroxyethylethylenediamine, di-2-hydroxyethylpropylenediamine, 2-hydroxypropylethylenediamine, di-2-hydroxypropylethylenediamine, polypropylene glycol)diamine, polypropylene glycol)triamine, polypropylene glycol)tetraamine, 1,2-diaminopropane, 1,3-diaminopropane,
1,4-diaminobutane, 1,5-diaminopentane, 1-6-diaminohexane, 1,7-diaminoheptane, 1,8-diaminooctane, 1,9-diaminononane, 1,10-diaminodecane, etc., benzylamine, diethylenetriamine, dipropylenetriamine, triethylenetetramine, tripropylenetetramine, tetraethylene pentamine, tetrapropylene pentamine, pentaethylene hexamine, nonaethylene decamine, trimethylhexamethylenediamine, etc., tetra(aminomethyl)methane, tetrakis(2-aminoethylaminomethyl)methane, 1,3 -bis(2'-aminoethylamino)propane, triethylene-bis(trimethylene)hexamine, bis(3-aminoethyl)amine, bis(hexamethylene)triamine, etc., 1,4-cyclohexanediamine, 4,4'-methylenebiscyclohexylamine, 4,4'-isopropylidenebiscyclohexylamine, norbornadiamine,
bis(aminomethyl)cyclohexane, diaminodicyclohexylmethane, isophoronediamine, menthenediamine, etc., bis(aminoalkyl)benzene, bis(aminoalkyl)naphthalene, bis(cyanoethyl)diethylenetriamine, ortho-xylylenediamine, meta-xylylenediamine, para-xylylenediamine, phenylenediamine, naphthylenediamine, diaminodiphenylmethane, diaminodiethylphenylmethane, 2,2-bis(4-aminophenyl)propane, 4,4'-diaminodiphenyl ether, 4,4'-diaminobenzophenone, 4,4'-diaminodiphenyl ether, 4,4'-diaminodiphenyl sulfone, 2,2'-dimethyl-4,4'-diaminodiphenylmethane, 2,4'-diaminobiphenyl, 2,3'-dimethyl-4,4'-diaminobiphenyl, 3,3'-dimethoxy-4,4'-diaminobiphenyl, bis(aminomethyl)naphthalene, bis(aminoethyl)naphthalene, etc., N-methylpiperazine, morpholine, 1,4-bis-(8-aminopropyl)-piperazine, piperazine-1,4-diazacycloheptane, 1-(2'-aminoethylpiperazine), 1-[2'-(2"-aminoethylamino)ethyl]piperazine, tricyclodecanediamine, and an amine compound (D1) having a plurality of amino groups such as polyurea amines as reaction products of the various kinds of polyamines described above and the various kinds of isocyanate components described above,
a primary or secondary alkanolamine (D2) such as monoethanolamine, monoisopropanolamine, monobutanolamine, N-methylethanolamine, N-ethylethanolamine, N-methylpropanolamine, diethanolamine, and diisopropanolamine, and
a primary or secondary amine (D3) such as ethylamine, octylamine, laurylamine, myristylamine, stearylamine, oleylamine, diethylamine, dibutylamine, and distearylamine.

From the viewpoint of the balance among adhesion to metal base materials, the appearance of the laminate, and pot life, the blending amount of the polyamine (D) is preferably blended such that the polyol composition (Y) has an amine value of 20 to 70 mgKOH/g and more preferably 25 to 50 mgKOH/g.

The amine value in the present specification means the number of milligrams of KOH that is equivalent to the amount of HCl required to neutralize 1 g of a sample and can be calculated using known methods without particular limitations. When the chemical structure of the amine compound (C) and, if necessary, the average molecular weight and the like thereof are known, the amine value can be calculated from (the number of amino groups per molecule/the average molecular weight) × 56.1 × 1,000. When the chemical structure, the average molecular weight, and the like of the amine compound are unknown, the amine value can be measured in accordance with known methods for measuring an amine value such as JIS K7237-1995.

### (Urethane-Forming Catalyst (E))

The adhesive of the present invention can promote the curing reaction by using a catalyst as needed. The catalyst is not limited to a particular catalyst so long as it promotes the urethane-forming reaction of the polyisocyanate composition (X) and the polyol composition (Y), and examples thereof include a metal-based catalyst (E1) and an aliphatic cyclic amide compound (E2).

Examples of the metal-based catalyst (E1) include metal complex-based, inorganic metal-based, and organometal-based catalysts. Examples of the metal complex-based catalysts include acetylacetonate salts of a metal selected from the group consisting of Fe (iron), Mn (manganese), Cu (copper), Zr (zirconium), Th (thorium), Ti (titanium), Al (aluminum), and Co (cobalt); examples thereof include iron acetylacetonate, manganese acetylacetonate, copper acetylacetonate, and zirconia acetylacetonate. In terms of toxicity and catalytic activity, iron acetylacetonate (Fe(acac)₃) or manganese acetylacetonate (Mn(acac)₂) is preferred.

Examples of the inorganic metal-based catalysts include those selected from Sn, Fe, Mn, Cu, Zr, Th, Ti, Al, Co, and the like.

Examples of the organometal-based catalysts include organozinc compounds such as zinc octylate, zinc neodecanoate, and zinc naphthenate; organotin compounds such as stannous diacetate, stannous dioctoate, stannous dioleate, stannous dilaurate, dibutyltin diacetate, dibutyltin dilaurate, dioctyltin dilaurate, dibutyltin oxide, and dibutyltin dichloride; organonickel compounds such as nickel octylate and nickel naphthenate; organocobalt compounds such as cobalt octylate and cobalt naphthenate; organobismuth compounds such as bismuth octylate, bismuth neodecanoate, and bismuth naphthenate; and titanium-based compounds such as tetraisopropyloxy titanate, dibutyltitanium dichloride, tetrabutyl titanate, butoxytitanium trichloride, and titanium chelate complexes with at least one of aliphatic diketones, aromatic diketones, and C₂₋₁₀ alcohols as a ligand.

Examples of the aliphatic cyclic amide compound (E2) include δ-valerolactam, ε-caprolactam, ω-enantholactam, η-capryllactam, and β-propiolactam. Among these, ε-caprolactam is more effective in promoting curing.

These catalysts (E) may be used individually or in combination. By using the metal-based catalyst (E1), the adhesive can have excellent seal strength. By using the aliphatic cyclic amide compound (E2), the adhesive can have excellent initial cohesive force and adhesion to metal base materials and is less likely to cause faulty appearance by air bubbles. Combined use of the metal-based catalyst (E1) and the aliphatic cyclic amide compound (E2) is also preferred.

The blending amount of the catalyst (E1) is preferably 0.001 to 3 parts by mass and more preferably 0.01 to 2 parts by mass with respect to 100 parts by mass of the total solid content of the polyisocyanate composition (X) and the polyol composition (Y). The blending amount of the catalyst (E2) is preferably 0.001 to 3 parts by mass and more preferably 0.01 to 2 parts by mass with respect to 100 parts by mass of the total solid content of the polyisocyanate composition (X) and the polyol composition (Y).

### (Pigment)

The adhesive of the present invention may contain pigments as needed. The pigments that can be used are not limited to particular pigments; examples thereof include organic pigments and inorganic pigments such as extender pigments, white pigments, black pigments, gray pigments, red pigments, brown pigments, green pigments, blue pigments, metallic powder pigments, luminescent pigments, and pearl pigments and plastic pigments described in the 1970 edition of the Handbook of Raw Materials for Coatings (edited by Japan Paint Manufacturers Association).

Examples of the extender pigments include sedimented barium sulfate, powdered calcium carbonate, sedimented calcium carbonate, calcium bicarbonate, white limestone, alumina white, silica, hydrous fine silica (white carbon), ultrafine anhydrous silica (Aerosil), silica sand, talc, sedimented magnesium carbonate, bentonite, clay, kaolin, and ocher.

Specific examples of the organic pigments include various kinds of insoluble azo pigments such as Benzidine Yellow, Hansa Yellow, and Lake Red 4R; soluble azo pigments such as Lake Red C, Carmine 6B, and Bordeaux 10; various kinds of (copper) phthalocyanine pigments such as phthalocyanine blue and phthalocyanine green; various kinds of basic dyeing lakes such as rhodamine lake and methyl violet lake; various kinds of mordant dye pigments such as quinoline lake and fast sky blue; various kinds of vat dyeing pigments such as anthraquinone pigments, thioindigo pigments, and perinone pigments; various kinds of quinacridone pigments such as Cinquasia Red B; various kinds of dioxazine pigments such as dioxazine violet; various kinds of condensed azo pigments such as Cromophtal; and aniline black.

Examples of the inorganic pigments include various kinds of chromates such as chrome yellow, zinc chromate, and molybdate orange; various kinds of ferrocyanides such as dark blue; various kinds of metal oxides such as titanium oxide, zinc white, Mapico Yellow, iron oxide, red iron oxide, chrome oxide green, and zirconium oxide; various kinds of sulfides and selenides such as cadmium yellow, cadmium red, and mercury sulfide; various kinds of sulfates such as barium sulfate and lead sulfate; various kinds of silicates such as calcium silicate and ultramarine blue; various kinds of carbonates such as calcium carbonate and magnesium carbonate; various kinds of phosphates such as cobalt violet and manganese violet; various kinds of metallic power pigments such as aluminum powder, gold powder, silver powder, copper powder, bronze powder, and brass powder; flake pigments of these metals and mica flake pigments; metallic pigments and pearl pigments such as mica flake pigments in the form of being covered with metal oxides and mica-like iron oxide pigments; and graphite and carbon black.

Examples of the plastic pigments include "Grandol PP-1000" and "PP-2000S" manufactured by DIC Corporation.

The pigment used may be selected as appropriate in accordance with a purpose. For example, inorganic oxides such as titanium oxide and zinc white are preferably used as a white pigment and carbon black is preferably used as a black pigment because of excellence in durability, weatherability, and visual quality.

The blending amount of the pigment is, as an example, 1 to 400 parts by mass with respect to 100 parts by mass of the total solid content of the polyisocyanate composition (X) and the polyol composition (Y) and more preferably 10 to 300 parts by mass for better adhesion and blocking resistance.

### (Adhesion Promoter)

The adhesive of the present invention may contain adhesion promoters. Examples of the adhesion promoters include coupling agents such as silane coupling agents, titanate coupling agents, and aluminum coupling agents, and epoxy resins.

Examples of the silane coupling agents include aminosilanes such as γ-aminopropyltnethoxysilane, γ-aminopropyltrimethoxysilane, N-β(aminoethyl)-γ-aminopropyltrimethoxysilane, N-β(aminoethyl)-γ-aminopropyltrimethyldimethoxysilane, and N-phenyl-γ-aminopropyltrimethoxysilane; epoxysilanes such as β-(3,4-epoxycyclohexyl)ethyltrimethoxysilane, γ-glycidoxypropyltnmethoxysilane, and γ-glycidoxypropyltriethoxysilane; vinylsilanes such as vinyltris(P-methoxyethoxy)silane, vinyltriethoxysilane, vinyltrimethoxysilane, and γ-methacryloxypropyltrimethoxysilane; hexamethyldisilazane; and γ-mercaptopropyltrimethoxysilane.

Examples of the titanate coupling agents include tetraisopropoxy titanium, tetra-n-butoxy titanium, butyl titanate dimer, tetrastearyl titanate, titanium acetylacetonate, titanium lactate, tetraoctylene glycol titanate, titanium lactate, and tetrastearoxy titanium.

Examples of the aluminum coupling agents include acetoalkoxyaluminum diisopropylate.

Examples of the epoxy resins include various kinds of epoxy resins such as epi-bis, novolac, β-methyl epichloro, cyclic oxirane, glycidyl ether, glycidyl ester, polyglycol ether, glycol ether, epoxidized fatty acid ester, polyvalent carboxylic acid ester, aminoglycidyl, and resorcinol types, which are generally commercially available and compounds such as triglycidyl tris(2-hydroxyethyl)isocyanurate, neopentyl glycol diglycidyl ether, 1,6-hexanediol diglycidyl ether, acrylic glycidyl ether, 2-ethylhexyl glycidyl ether, phenyl glycidyl ether, phenol glycidyl ether, p-t-butyl phenyl glycidyl ether, adipic acid diglycidyl ester, o-phthalic acid diglycidyl ester, glycidyl methacrylate, and butyl glycidyl ether.

### (Other Additives)

The adhesive of the present invention may contain, other than the components described above, leveling agents, inorganic fine particles such as colloidal silica and alumina sol, polymethylmethacrylate-based organic fine particles, defoamers, anti-sagging agents, wetting and dispersing agents, viscosity modifiers, UV absorbers, metal deactivators, peroxide decomposers, flame retardants, reinforcing agents, plasticizers, lubricants, rust inhibitors, fluorescent whitening agents, inorganic heat absorbers, fire retardants, antistatic agents, dehydrating agents, known and customary thermoplastic elastomers, stickiness imparting agents, phosphoric acid compounds, melamine resins, and reactive elastomers. The blending amounts of these additives are adjusted as appropriate to the extent that they do not impair the desirability of the adhesive of the present invention.

Examples of the plasticizers include phthalic acid-based plasticizers, fatty acid-based plasticizers, aromatic polycarboxylic acid-based plasticizers, phosphoric acid-based plasticizers, polyol-based plasticizers, epoxy-based plasticizers, polyester-based plasticizers, and carbonate-based plasticizers.

Examples of the phthalic acid-based plasticizers include phthalate-based plasticizers such as dimethyl phthalate, diethyl phthalate, dibutyl phthalate, diisobutyl phthalate, dihexyl phthalate, diheptyl phthalate, di-(2-ethylhexyl) phthalate, di-n-octyl phthalate, dinonyl phthalate, diisononyl phthalate, didecyl phthalate, diisodecyl phthalate, ditridecyl phthalate, diundecyl phthalate, dilauryl phthalate, distearyl phthalate, diphenyl phthalate, dibenzyl phthalate, butyl benzyl phthalate, dicyclohexyl phthalate, octyldecyl phthalate, dimethyl isophthalate, di-(2-ethylhexyl)isophthalate, and diisooctyl isophthalate and tetrahydrophthalate-based plasticizers such as di-(2-ethylhexyl)tetrahydrophthalate, di-n-octyl tetrahydrophthalate, and diisodecyl tetrahydrophthalate.

Examples of the fatty acid-based plasticizers include adipic acid-based plasticizers such as di-n-butyl adipate, di-(2-ethylhexyl)adipate, diisodecyl adipate, diisononyl adipate, di(C6-C10 alkyl)adipate, and dibutyl diglycol adipate; azelaic acid-based plasticizers such as di-n-hexyl azelate, di-(2-ethylhexyl)azelate, and diisooctyl azelate; sebacic acid-based plasticizers such as di-n-butyl sebacate, di-(2-ethylhexyl)sebacate, and diisononyl sebacate; maleic acid-based plasticizers such as dimethyl malate, diethyl malate, di-n-butyl malate, and di-(2-ethylhexyl) malate, fumaric acid-based plasticizers such as di-n-butyl fumarate and di-(2-ethylhexyl) fumarate; itaconic acid-based plasticizers such as monomethyl itaconate, monobutyl itaconate, dimethyl itaconate, diethyl itaconate, dibutyl itaconate, and di-(2-ethylhexyl) itaconate; stearic acid-based plasticizers such as n-butyl stearate, glycerin monostearate, and diethylene glycol distearate; oleic acid-based plasticizers such as butyl oleate, glyceryl monooleate, and diethylene glycol monooleate; citric acid-based plasticizers such as triethyl citrate, tri-n-butyl citrate, acetyl triethyl citrate, acetyl tributyl citrate, and acetyl tri-(2-ethylhexyl) citrate; ricinoleic acid-based plasticizers such as methyl acetyl ricinolate, butyl acetyl ricinolate, glyceryl monoricinolate, and diethylene glycol monoricinolate; and other fatty acid-based plasticizers such as diethylene glycol monolaurate, diethylene glycol dipelargonate, and pentaerythritol fatty acid esters.

Examples of the aromatic polycarboxylic acid-based plasticizers include trimellitic acid-based plasticizers such as tri-n-hexyl trimellitate, tri-(2-ethylhexyl) trimellitate, tri-n-octyl trimellitate, triisooctyl trimellitate, triisononyl trimellitate, tridecyl trimellitate, and triisodecyl trimellitate and pyromellitic acid-based plasticizers such as tetra-(2-ethylhexyl) pyromellitate and tetra-n-octyl pyromellitate.

Examples of the phosphoric acid-based plasticizers include triethyl phosphate, tributyl phosphate, tri-(2-ethylhexyl) phosphate, tributoxyethyl phosphate, triphenyl phosphate, octyl diphenyl phosphate, cresyl diphenyl phosphate, cresyl phenyl phosphate, tricresyl phosphate, trixylenyl phosphate, tris(chloroethyl) phosphate, tris(chloropropyl) phosphate, tris(dichloropropyl) phosphate, and tris(isopropylphenyl) phosphate.

Examples of the polyol-based plasticizers include glycol-based plasticizers such as diethylene glycol dibenzoate, dipropylene glycol dibenzoate, triethylene glycol dibenzoate, triethylene glycol di-(2-ethyl butyrate), triethylene glycol di-(2-ethyl hexanoate), and dibutyl methylene bis-thioglycolate; and glycerin-based plasticizers such as glycerol monoacetate, glycerol triacetate, and glycerol tributyrate.

Examples of the epoxy-based plasticizers include epoxidized soybean oil, epoxy butyl stearate, di-2-ethylhexyl epoxy hexahydrophthalate, diisodecyl epoxy hexahydrophthalate, epoxy triglyceride, epoxidized octyl oleate, and epoxidized decyl oleate.

Examples of the polyester-based plasticizers include adipic acid-based polyesters, sebacic acid-based polyesters, and phthalic acid-based polyesters.

Examples of the carbonate-based plasticizers include propylene carbonate and ethylene carbonate.

Other examples of the plasticizers include partially hydrogenated terphenyls, adhesive plasticizers, and polymerizable plasticizers such as diallyl phthalate and acrylic monomers and oligomers. These plasticizers can be used individually or in combination.

### <<Method for Producing Laminate>>

The laminate of the present invention can be obtained by known methods. It is obtained by a method having a two-component mixing process in which the polyisocyanate composition (X) and the polyol composition (Y) are mixed together in advance and are then applied to a first base material, then a second base material is laminated to the applied face, and the adhesive layer is cured to be obtained or a method having a two-component separate application process in which the polyisocyanate composition (X) and the composition polyol (Y) are separately applied to the first base material and the second base material, respectively, then the applied faces are brought into contact with each other to be pressure-bonded to each other to laminate the first base film and the second base film on each another, and the adhesive layer is cured to be obtained, for example.

As another form of the two-component separate application, a mixture of the polyisocyanate composition (X) and a compound having active hydrogen groups is applied to one base material, the polyol composition (Y) is applied to the other base material, and then the applied faces are brought into contact with each other to be pressure-bonded to each other to laminate these base materials on each other and to cure the adhesive layer, which is also preferred. As the compound having active hydrogen groups to be mixed with the polyisocyanate composition (X), those exemplified as the polyol (B) and the compound (C) can be used.

In particular, the adhesive of the present invention is preferably used in the method having a separate application process because it is easier to ensure the time for the polyol composition (Y) to wet and spread on the base material. After applying the polyisocyanate composition (X) and the polyol composition (Y) to the separate base materials, the polyisocyanate composition (X) and the polyol composition (Y) can sufficiently wet and spread on the base materials before bringing them into contact with each other.

Examples of a preferred aspect of the method for producing the laminate of the present invention include a method of applying the polyol composition (Y) to an aluminum vapor deposition layer of a base material having the aluminum vapor deposition layer, applying the polyisocyanate composition (X) to the other base material, and bringing the polyisocyanate composition (X) and the polyol composition (Y) into contact with each other and pressure-bonding them to each other. Solventless adhesives often have poor adhesion to the aluminum vapor deposition layer, but by using the adhesive of the present invention and employing the above method, adhesion between the adhesive layer and the aluminum vapor deposition layer can be made good.

Examples of another preferred aspect of the method for producing the laminate of the present invention include a method of applying the polyisocyanate composition (X) to a printed layer of a base material having the printed layer, applying the polyol composition (Y) to the other base material, and bringing the polyisocyanate composition (X) and the polyol composition (Y) into contact with each other and pressure-bonding them to each other. When the printed layer and the other base material are bonded to each other using a solventless adhesive, the adhesive may dissolve the printed layer or act on it in another way, resulting in faulty appearance. By employing the above method, the faulty appearance of the laminate can be prevented.

When the laminate of the present invention is produced by the method having a two-component mixing process, the application amount of the adhesive (a mixture of the polyisocyanate composition (X) and the polyol composition (Y)) is 0.5 to 5.0 g/m² as an example. When the laminate of the present invention is produced by the method having a two-component separate application process, the application amounts of the polyisocyanate composition (X) and the polyol composition (Y) are each preferably 0.3 to 3.0 g/m² and are more preferably used in about 0.3 to 2.0 g/m².

The method of pressure bonding is preferably a method bonding the two bases to each other while causing them to pass through between two rolls (laminate rolls) through pressure between the rolls; the temperature of the laminate rolls is preferably about room temperature to 80°C, whereas the pressure is preferably about 0.05 to 0.5 MPa.

Whichever method is used, when the two-component curable adhesive of the present invention is used, the adhesive cures to exhibit practical physical properties in 12 to 72 hours at room temperature (20 to 25°C) or under heating, or more specifically, 15 to 35°C after lamination.

### <<Laminate>>

The laminate of the present invention is obtained by bonding a plurality of base materials to each other in the manner described above. In addition, another base material can be further bonded to the laminate of the present invention. The adhesive used in this process may be the one described above or a general-purpose two-component curable adhesive. When the other base material is further bonded to the laminate obtained by the method of the present invention, dry lamination or non-solvent lamination may be used, or separate application may be used.

### Specific examples of the configuration of the laminate include

(1) base material 1/adhesive layer 1/sealant film,
(2) base material 1/adhesive layer 1/metal vapor-deposited non-oriented film,
(3) base material 1/adhesive layer 1/metal vapor-deposited oriented film,
(4) transparent vapor-deposited oriented film/adhesive layer 1/sealant film,
(5) base material 1/adhesive layer 1/base material 2/adhesive layer 2/sealant film,
(6) base material 1/adhesive layer 1/metal vapor-deposited oriented film/adhesive layer 2/sealant film,
(7) base material 1/adhesive layer 1/transparent vapor-deposited oriented film/adhesive layer 2/sealant film,
(8) base material 1/adhesive layer 1/metal layer/adhesive layer 2/sealant film,
(9) base material 1/adhesive layer 1/base material 2/adhesive layer 2/metal layer/adhesive layer 3/sealant film, and
(10) base material 1/adhesive layer 1/metal layer/adhesive layer 2/base material 2/adhesive layer 3/sealant film,
   but these are not limiting.

Examples of the base material 1 used in the configuration (1) include OPP films, PET films, nylon films, and paper. The base material 1 may be provided with a coating for the purpose of improving gas barrier properties and ink receptivity when a printed layer described later is provided. Commercially available examples of the base film 1 provided with a coating include K-OPP film and K-PET film. The adhesive layer 1 is a cured coating film of the adhesive of the present invention. Examples of the sealant film include CPP films and LLDPE films. A printed layer may be provided on a face of the base material 1 closer to the adhesive layer 1 (when the base material film 1 provided with a coating is used, a face of the coating layer closer to the adhesive layer 1) or a face on the side opposite to the adhesive layer 1. The printed layer is formed by general printing methods that have conventionally been used for printing on polymer films and paper with various kinds of printing inks such as gravure inks, flexographic inks, offset inks, stencil inks, and inkjet inks.

Examples of the base material 1 used in the configurations (2) and (3) include OPP films, PET films, and paper. The adhesive layer 1 is a cured coating film of the adhesive of the present invention. As the metal vapor-deposited non-oriented film, a VM-CPP film, in which metal vapor deposition such as aluminum is applied to a CPP film, can be used, whereas as the metal vapor-deposited oriented film, a VM-OPP film, in which metal vapor deposition such as aluminum is applied to an OPP film, can be used. In the same way as the configuration (1), a printed layer may be provided on either face of the base material 1.

Examples of the transparent vapor-deposited oriented film used in the configuration (4) include films obtained by applying silica or alumina vapor deposition to OPP films, PET films, nylon films, or the like. For the purpose of protecting the inorganic vapor deposition layer of silica or alumina, a film provided with a coating on the vapor deposition layer may be used. The adhesive layer 1 is a cured coating film of the adhesive of the present invention. The sealant film can be the same as those of the configuration (1). A printed layer may be provided on a face of the transparent vapor-deposited oriented film closer to the adhesive layer 1 (when the inorganic vapor deposition layer provided with a coating is used, a face of the coating layer closer to the adhesive layer 1). The method for forming the printed layer is similar to that of the configuration (1).

Examples of the base material 1 used in the configuration (5) include PET films and paper. Examples of the base material 2 include nylon films. At least one of the adhesive layers 1 and 2 is a cured coating film of the adhesive of the present invention. The sealant film can be the same as those of the configuration (1). In the same way as the configuration (1), a printed layer may be provided on either face of the base material 1.

The base material 1 of the configuration (6) can be the same as those of the configurations (2) and (3). Examples of the metal vapor-deposited oriented film include the VM-OPP film or a VM-PET film, in which metal vapor deposition such as aluminum is applied to an OPP film or a PET film. At least one of the adhesive layers 1 and 2 is a cured coating film of the adhesive of the present invention. The sealant film can be the same as those of the configuration (1). In the same way as the configuration (1), a printed layer may be provided on either face of the base material 1.

Examples of the base material 1 of the configuration (7) include PET films and paper. The transparent vapor-deposited oriented film can be the same as those of the configuration (4). At least one of the adhesive layers 1 and 2 is a cured coating film of the adhesive of the present invention. The sealant film can be the same as those of the configuration (1). In the same way as the configuration (1), a printed layer may be provided on either face of the base material 1.

Examples of the base material 1 of the configuration (8) include PET films and paper. Examples of the metal layer include aluminum foil. At least one of the adhesive layers 1 and 2 is a cured coating film of the adhesive of the present invention. The sealant film can be the same as those of the configuration (1). In the same way as the configuration (1), a printed layer may be provided on either face of the base material 1.

Examples of the base material 1 of the configurations (9) and (10) include PET films and paper. Examples of the base material 2 include nylon films. Examples of the metal layer include aluminum foil. At least one layer of the adhesive layers 1, 2, and 3 is a cured coating film of the adhesive of the present invention. The sealant film can be the same as those of the configuration (1). In the same way as the configuration (1), a printed layer may be provided on either face of the base material 1.

### <<Packaging Material>>

The packaging material of the present invention is formed by molding the laminate of the present invention into a bag shape. As a method of production, the laminate of the present invention is folded or overlapped so that its inner faces (the sealant film faces) are faced each other, and its peripheral edges are heat sealed by forms such as a side seal type, a two-side seal type, a three-side seal type, a four-side seal type, an envelope-attached seal type, a butt-seam seal type, a folded seal type, a flat bottom seal type, a square bottom seal type, a gusset type, and any other heat seal types. The packaging material of the present invention can take various forms in accordance with the contents, use environments, and use forms. Self-supporting packaging materials (standing pouches) or the like are also possible. As a method of heat sealing, it can be performed by known methods such as bar sealing, rotary roll sealing, belt sealing, impulse sealing, high-frequency sealing, and ultrasonic sealing. Easy-opening treatment and resealable means may be provided.

The packaging material of the present invention can industrially be used as packaging materials mainly filled with food, detergents, and drugs. Examples of specific uses as detergents and drugs include liquid detergents for laundry, liquid detergents for kitchens, liquid detergents for baths, liquid soaps for baths, liquid shampoos, liquid conditioners, and pharmaceutical tablets. The packaging material of the present invention can be used as secondary packaging materials packaging the containers.

### [Examples]

The following describes the present invention in more detail with reference to specific synthesis examples and examples; the present invention is not limited to these examples. In the following examples, "parts" and "%" represent "parts by mass" and "% by mass," respectively, unless otherwise noted.

### <Preparation of Polyisocyanate Composition (X)>

### (Polyisocyanate Composition (X-1))

Into a flask equipped with a stirrer, a thermometer, and a nitrogen gas introduction tube, 40.2 parts of 4,4-diphenylmethane diisocyanate (hereinafter, abbreviated as "MDI"), 10.0 parts of hexamethylene diisocyanate nurate form (hereinafter, abbreviated as "HDI nurate") were charged, and the mixture was stirred under nitrogen gas and was heated up to 60°C. A bifunctional polypropylene glycol (hereinafter, abbreviated as "PPG") with a number average molecular weight of 1,000 in an amount of 37.9 parts and 2.0 parts of 2,2,4-trimethyl-1,3-pentanediol were mixed together, and the mixture was further added dropwise to this flask in a few separate batches, and the mixture was stirred for 5 to 6 hours at 80°C to cause a urethane-forming reaction, thereby obtaining a polyisocyanate. The obtained polyisocyanate was mixed with 10.0 parts of carbodiimide-modified isocyanate to obtain a polyisocyanate composition (X-1).

### <Preparation of Polyol Composition (Y)>

Polyol compositions (Y-1) to (Y-13) and (Y'-1) to (Y'-3) were prepared with the formulations listed in Tables 1 to 3. The compounds in the tables are as follows.
Polyol (B1-1-1): Actcol D-1000 (manufactured by Mitsui Chemicals, Inc., number average molecular weight: 1,000, a bifunctional polypropylene polyol)
Polyol (B1-1-2): Actcol T-1000 (manufactured by Mitsui Chemicals, Inc., number average molecular weight: 1,000, a trifunctional polypropylene polyol)
Polyol (B1-1-3): Actcol D-400 (manufactured by Mitsui Chemicals, Inc., number average molecular weight: 400, a bifunctional polypropylene polyol)
Polyol (B1): D-4000 (manufactured by Mitsui Chemicals, Inc., number average molecular weight: 4,000, a bifunctional polypropylene polyol)
Polyol (B1-2): Sannix HD-402 (manufactured by Sanyo Chemical Industries, Ltd., number average molecular weight: 600, a tetrafunctional polypropylene polyol)
Polyol (B2): castor oil
Polyol (B3): Kuraray Polyol F-510 (a polyester triol with a weight average molecular weight of 500 containing trimethylolpropane, 3-methyl-1,5-pentanediol, and adipic acid)
Compound (C-1): Dimethylolpropionic acid
Compound (C-2): Dimethylolbutanoic acid
Polyamine (D1): Jeffamine T-403 (manufactured by Huntsman, polyoxypropylene triamine, Mw = 400, amine value = 355 mgKOH/g)
Polyamine (D2): Monoethanolamine
Polyamine (D3): Diethylamine
Catalyst (E1-1): BiCAT8 (manufactured by Shepherd, a mixture of bismuth neodecanoate and zinc neodecanoate)
Catalyst (E1-2): Dibutyltin dilaurate
Catalyst (E2): ε-caprolactam
KBM-403: Manufactured by Shin-Etsu Silicone, 3-glycidoxypropyltrimethoxysilane
KBE-903: Manufactured by Shin-Etsu Silicone, 3-aminopropyltriethoxysilane
Leveling agent: Surfynol 420 (manufactured by Evonik, a polyether compound of acetylene-based dialcohol)

**[Table 1]**

| | Y-1 | Y-2 | Y-3 | Y-4 | Y-5 |
|---|---|---|---|---|---|
| Polyol (B1-1-1) | 40.00 | | | | |
| Polyol (B1-1-2) | | | | | 13.66 |
| Polyol (B1-1-3) | | 40.00 | | 40.00 | 40.00 |
| Polyol (B1) | | | 40.00 | | |
| Polyol (B1-2) | | | | 10.00 | 10.00 |
| Polyol (B2) | 44.40 | 44.40 | 44.40 | 33.20 | |
| Polyol (B3) | | | | | 25.00 |
| Compound (C-1) | 0.90 | 0.90 | 0.90 | 0.90 | 0.90 |
| Compound (C-2) | | | | | |
| Polyamine (D1) | 7.80 | 7.80 | 7.80 | 14.00 | 9.00 |
| Polyamine (D2) | | | | | |
| Polyamine (D3) | | | | | |
| Catalyst (E1-1) | 1.00 | 1.00 | 1.00 | 1.00 | 0.50 |
| Catalyst (E1-2) | | | | | |
| Catalyst (E2) | 0.94 | 0.94 | 0.94 | 0.90 | 0.94 |
| KBM-403 | | | | | |
| KBE-903 | | | | | |
| Leveling agent | 5.00 | 5.00 | 5.00 | | |
| Amine value (mgKOH/g) | 27.8 | 27.8 | 27.8 | 50.0 | 32.1 |

**[Table 2]**

| | Y-6 | Y-7 | Y-8 | Y-9 | Y-10 | Y-11 |
|---|---|---|---|---|---|---|
| Polyol (B1-1-1) | | | | | | |
| Polyol (B1-1-2) | 13.66 | 14.66 | 11.56 | 18.66 | 18.66 | 14.86 |
| Polyol (B1-1-3) | 40.00 | 40.00 | 40.00 | 40.00 | 40.00 | 40.00 |
| Polyol (B1) | | | | | | |
| Polyol (B1-2) | 10.00 | 10.00 | 10.00 | 10.00 | 10.00 | 10.00 |
| Polyol (B2) | | | | | | |
| Polyol (B3) | 25.00 | 25.00 | 25.00 | 25.00 | 25.00 | 25.00 |
| Compound (C-1) | | 0.10 | 3.00 | 0.90 | 0.90 | 0.90 |
| Compound (C-2) | 0.90 | | | | | |
| Polyamine (D1) | 9.00 | 9.00 | 9.00 | | | 9.00 |
| Polyamine (D2) | | | | 4.00 | | |
| Polyamine (D3) | | | | | 4.00 | |
| Catalyst (E1-1) | 0.50 | 0.50 | 0.50 | 0.50 | 0.50 | |
| Catalyst (E1-2) | | | | | | 0.20 |
| Catalyst (E2) | 0.94 | 0.94 | 0.94 | 0.94 | 0.94 | |
| KBM-403 | | | | | | |
| KBE-903 | | | | | | |
| Leveling agent | | | | | | |
| Amine value (mgKOH/g) | 32.1 | 32.1 | 32.1 | 21.8 | 0.0 | 32.1 |

**[Table 3]**

| | Y-12 | Y-13 | Y'-1 | Y'-2 | Y'-3 |
|---|---|---|---|---|---|
| Polyol (B1-1-1) | | | | | |
| Polyol (B1-1-2) | 14.06 | 13.46 | | 15.06 | 23.00 |
| Polyol (B1-1-3) | 40.00 | 40.00 | 40.00 | 40.00 | 40.00 |
| Polyol (B1) | | | | | |
| Polyol (B1-2) | 10.00 | 10.00 | | 10.00 | 10.00 |
| Polyol (B2) | | | 45.30 | | |
| Polyol (B3) | 25.00 | 25.00 | | 25.00 | 25.00 |
| Compound (C-1) | 0.90 | 0.50 | | | |
| Compound (C-2) | | | | | |
| Polyamine (D1) | 9.00 | 9.00 | 7.80 | 9.00 | |
| Polyamine (D2) | | | | | |
| Polyamine (D3) | | | | | |
| Catalyst (E1-1) | 1.00 | 0.50 | 1.00 | | 0.50 |
| Catalyst (E1-2) | | | | | |
| Catalyst (E2) | | 0.94 | 0.94 | 0.94 | 0.94 |
| KBM-403 | | 0.40 | | | 0.40 |
| KBE-903 | | 0.20 | | | 0.20 |
| Leveling agent | | | 5.00 | | |
| Amine value (mgKOH/g) | 32.1 | 32.1 | 27.8 | 32.1 | 0.0 |

### <Evaluation>

### (Laminate Strength OPP/VMCPP)

The polyisocyanate composition (X) that had been heated was applied to an OPP film (manufactured by Toyobo Co., Ltd., P2161), and the polyol composition (Y) that had been heated was applied to a VMCPP film (manufactured by Toray Advanced Film Co., Ltd., 2703). The OPP film and the VMCPP film were pressure-bonded to each other with a nip roll (50°C) and aged at 25°C for 24 hours to obtain a laminate 1 of OPP/adhesive layer/VMCPP. The respective application amounts (g/m²) of the polyisocyanate composition (X) and the polyol composition (Y) are as listed in Tables 4 and 5.

The laminate 1 was cut into a piece that is 300 mm long and 15 mm wide, and the T-type peel strength between OPP and VMCPP was measured at 15 mm wide by pulling at a peel rate of 300 mm/minute under a 25°C environment using a tensile tester manufactured by Instron. This test was conducted five times, and the average value was determined and evaluated based on the following criteria, and the results are summarized in Tables 4 and 5.
5: 1.5 N/15 mm or more
4: 1.0 N/15 mm or more and less than 1.5 N/15 mm
3: 0.5 N/15 mm or more and less than 1.0 N/15 mm
2: 0.2 N/15 mm or more and less than 0.5 N/15 mm
1: Less than 0.2 N/15 mm

### (Laminate Strength OPP/CPP)

The polyisocyanate composition (X) that had been heated was applied to an OPP film (manufactured by Toyobo Co., Ltd., P2161), and the polyol composition (Y) that had been heated was applied to a CPP film (manufactured by Toyobo Co., Ltd., P1128). The OPP film and the CPP film were pressure-bonded to each other with a nip roll (50°C) to obtain a laminate 2 of OPP/adhesive layer/CPP. The respective application amounts (g/m²) of the polyisocyanate composition (X) and the polyol composition (Y) are as listed in Tables 4 and 5. Laminate strength was measured and evaluated in the same manner as for the laminate 1, and the results are summarized in Tables 4 and 5.

### (Processed Appearance)

Using the polyisocyanate composition (X) for a corona-treated PET film (12 µm thick) and the polyol composition (Y) for a VMCPP film (25 µm thick), they were bonded to each other at each processing speed of 100, 150, 200, and 250 m/min. The respective application amounts (g/m²) of the polyisocyanate composition (X) and the polyol composition (Y) are as listed in Tables 4 and 5. After being aged at 25°C for 24 hours, the presence or absence of air bubbles left in the laminate was checked, and a processing speed range with no air bubbles left was identified. Evaluation was performed based on the following five grades, and the results are summarized in Tables 4 and 5.
5: Absence of residual air bubbles at 100 to 250 m/min
4: Absence of residual air bubbles at 100 to 200 m/min
3: Absence of residual air bubbles at 100 to 150 m/min
2: Absence of residual air bubbles at 100 m/min
1: Presence of residual air bubbles at 100 m/min

**[Table 4]**

| | | Example 1 | Example 2 | Example 3 | Example 4 | Example 5 | Example 6 | Example 7 | Example 8 |
|---|---|---|---|---|---|---|---|---|---|
| Polyisocyanate composition (X) | | 1.0 | 1.0 | 0.9 | 1.1 | 1.0 | 1.0 | 1.0 | 1.0 |
| Polyol composition (Y-1) | | 0.7 | | | | | | | |
| Polyol composition (Y-2) | | | 0.7 | | | | | | |
| Polyol composition (Y-3) | | | | 0.8 | | | | | |
| Polyol composition (Y-4) | | | | | 0.6 | | | | |
| Polyol composition (Y-5) | | | | | | 0.7 | | | |
| Polyol composition (Y-6) | | | | | | | 0.7 | | |
| Polyol composition (Y-7) | | | | | | | | 0.7 | |
| Polyol composition (Y-8) | | | | | | | | | 0.7 |
| Laminate strength | OPP/VMCPP | 4 | 5 | 4 | 5 | 5 | 5 | 3 | 5 |
| | OPP/CPP | 3 | 4 | 4 | 5 | 5 | 5 | 3 | 4 |
| Processed appearance | | 4 | 5 | 5 | 5 | 5 | 5 | 4 | 3 |

**[Table 5]**

| | | Example 9 | Example 10 | Example 11 | Example 12 | Example 13 | Comparative Example 1 | Comparative Example 2 | Comparative Example 3 |
|---|---|---|---|---|---|---|---|---|---|
| Polyisocyanate composition (X) | | 1.0 | 1.0 | 1.0 | 1.0 | 1.0 | 1.0 | 1.0 | 1.0 |
| Polyol composition (Y-9) | | 0.7 | | | | | | | |
| Polyol composition (Y-10) | | | 0.7 | | | | | | |
| Polyol composition (Y-11) | | | | 0.7 | | | | | |
| Polyol composition (Y-12) | | | | | 0.7 | | | | |
| Polyol composition (Y-13) | | | | | | 0.7 | | | |
| Polyol composition (Y'-1) | | | | | | | 0.7 | | |
| Polyol composition (Y'-2) | | | | | | | | 0.7 | |
| Polyol composition (Y'-3) | | | | | | | | | 0.7 |
| Laminate strength | OPP/VMCPP | 5 | 5 | 4 | 5 | 5 | 1 | 1 | 2 |
| | OPP/CPP | 4 | 4 | 4 | 5 | 5 | 4 | 4 | 3 |
| Processed appearance | | 5 | 5 | 5 | 4 | 5 | 2 | 3 | 1 |

## Claims

1. A two-component curable adhesive comprising:
a polyisocyanate composition (X) and a polyol composition (Y),
the polyisocyanate composition (X) containing a polyisocyanate compound (A), and
the polyol composition (Y) containing a polyol (B) and a compound (C) that is at least one selected from the group consisting of 2,2-dimethylolacetic acid, 2,2-dimethylolpropionic acid, 2,2-dimethylolbutanoic acid, and 2,2-dimethylolpentanoic acid.

2. The two-component curable adhesive according to claim 1, wherein the polyol composition (Y) contains a polyamine (D).

3. The two-component curable adhesive according to claim 1 or 2, wherein the polyol (B) contains at least one of a polyether polyol (B1) and a vegetable oil polyol (B2).

4. The two-component curable adhesive according to any one of claims 1 to 3, wherein the polyol (B) contains a polyether diol (B 1-1) with a number average molecular weight of 130 or more and 3,000 or less.

5. The two-component curable adhesive according to any one of claims 1 to 4, wherein the polyol (B) contains a tri- or more functional polyether polyol (B1-2).

6. The two-component curable adhesive according to any one of claims 1 to 5, wherein the polyol (B) contains a polyester polyol (B3).

7. The two-component curable adhesive according to claim 6, wherein the polyester polyol (B3) is a reaction product of a composition containing a polyvalent carboxylic acid and a polyhydric alcohol, wherein
a blending amount of an aliphatic polyvalent carboxylic acid in the polyvalent carboxylic acid is 80% by mass or more and a blending amount of an aliphatic polyhydric alcohol in the polyhydric alcohol is 80% by mass or more.

8. The two-component curable adhesive according to any one of claims 1 to 7, wherein the polyol composition (Y) contains a urethane-forming catalyst (E).

9. A laminate comprising:
a first base material;
a second base material; and
an adhesive layer bonding the first base material and the second base material to each other,
the adhesive layer being a cured coating film of the adhesive according to any one of claims 1 to 8.

10. A method for producing a laminate, the method comprising:
a step of applying a polyisocyanate composition (X) to a first base material;
a step of applying a polyol composition (Y) to a second base material; and
a step of bonding the first base material and the second base material to each other such that the polyisocyanate composition (X) and the polyol composition (Y) are brought into contact with each other.

11. A packaging material comprising the laminate according to claim 9.
